(19) Europäisches Patentamt
European Patent Office
Office européen des brevets

(11) Veröffentlichungsnummer: **0 014 180**
**B1**

# (12) EUROPÄISCHE PATENTSCHRIFT

(45) Veröffentlichungstag der Patentschrift: **27.07.83**

(51) Int. Cl.³: **C 09 B 67/26,** C 09 B 69/02, D 21 H 3/80

(21) Anmeldenummer: **80810014.3**

(22) Anmeldetag: **14.01.80**

**(54) Stabile konzentrierte Lösung eines Farbstoffes der Disazoreihe, Verfahren zu deren Herstellung und Verwendung dieser Lösung.**

(30) Priorität: **18.01.79 CH 487/79**
**19.02.79 CH 1633/79**

(43) Veröffentlichungstag der Anmeldung: **06.08.80 Patentblatt 80/16**

(45) Bekanntmachung des Hinweises auf die Patenterteilung: **27.07.83 Patentblatt 83/30**

(84) Benannte Vertragsstaaten: **CH DE FR GB SE**

(56) Entgegenhaltungen:
**DE-A-2 343 588**
**DE-A-2 629 674**
**FR-A-2 111 628**
**FR-A-2 193 065**
**FR-A-2 392 086**
**US-A-3 621 008**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Lacroix, Roger, Dr., Lavoisier Res 2000, F-68330 Huningue (FR)**

EP 0 014 180 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Stabile, konzentrierte Lösung eines Farbstoffes der Disazoreihe, Verfahren zu deren Herstellung und Verwendung dieser Lösung

Die Erfindung betrifft eine stabile konzentrierte Lösung eines Farbstoffes der Disazoreihe, Verfahren zu deren Herstellung und deren Verwendung zum Färben von Cellulose und regenerierter Cellulose sowie insbesondere Papier.

Flüssigformulierungen von sauren Disazoarylharnstoffarbstoffen, u. a. auch von Papierfarbstoffen, sind z. B. aus der DE-A-2 629 674 bekannt. Diese Formulierungen sind dadurch gekennzeichnet, daß sie den Farbstoff, gegebenenfalls in Form eines Alkalisalzes, insbesondere des Natriumsalzes, gelöst in einem Diäthylenglykolmonoalkyläther gegebenenfalls im Gemisch mit einem Alkylenglykol enthalten. Es hat sich jedoch herausgestellt, daß bei der Herstellung im Betrieb Schwierigkeiten auftreten können, z. B. ist das Filtrieren der Lösung problematisch, und außerdem weisen diese Lösungen einen unerwünscht hohen Anteil an organischem Lösungsmittel auf.

Ferner sind aus der DE-A-2 335 512 Farbstofformulierungen von sulfonsäuregruppenhaltigen Azo- oder Nitrofarbstoffen u. a. auch von Papierfarbstoffen bekannt. Diese enthalten den Farbstoff gelöst in einem mit Wasser in jedem Verhältnis mischbaren Lösungsmittelgemisch, bestehend aus einem aprotischen Lösungsmittel oder einem Gemisch derselben, einem Glykol oder Glykoläther und gegebenenfalls Wasser.

Es ist jedoch nicht möglich von dem Farbstoff der Formel

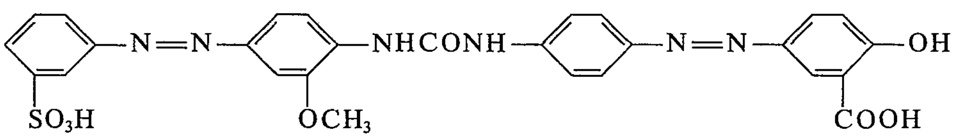 (I)

in Form des Natrium-, Kalium- bzw. Ammoniumsalzes gemäß der DE-A-2 335 512 stabile konzentrierte Lösungen herzustellen.

Aus der DE-A-2 343 588 ist eine Flüssigformulierung von monosulfierten Disazofarbstoffen zum Färben von Polyamidtextilmaterialien bekannt, die außer dem Farbstoff in Form des Lithium- bzw. Tri-(2-hydroxyäthyl)-ammoniumsalz N-Methylpyrrolidon und Wasser enthält. Mit dieser Flüssigformulierung ist es jedoch nicht möglich, mit dem Farbstoff der Formel I in Form des Lithium- bzw. Tri-(2-hydroxyäthyl)-ammoniumsalz eine konzentrierte Lösung herzustellen, die für die Applikation für Papier in weichem Wasser geeignet ist.

Es wurde nun gefunden, daß man überraschenderweise stabile konzentrierte echte Lösungen, die die obengenannten Nachteile nicht aufweisen erhält, wenn man das Lithiumsalz des Farbstoffes der Formel I in einem Gemisch aus Wasser, Pyrrolidon bzw. N-Alkylpyrrolidon und Diäthylenglykolmonoalkyläther löst. Der Farbstoff kann noch bis zu 75%, bezogen auf das Gesamtgewicht des Farbstoffes, als Natrium-, Kalium oder Ammoniumsalzes dieses Farbstoffes enthalten.

Die erfindungsgemäße Farbstofflösung ist dadurch gekennzeichnet, daß sie 15 bis 30, vorzugsweise 20 bis 25 Gewichtsprozent des Lithiumsalzes des Farbstoffes der Formel I gelöst in 5 bis 35, vorzugsweise 20 bis 30 Gewichtsprozent Wasser, 2 bis 10, vorzugsweise 3 bis 8 Gewichtsprozent Pyrrolidon oder N-Alkyl($C_1-C_4$)pyrrolidon und 35 bis 50, vorzugsweise 40 bis 50 Gewichtsprozent eines Diäthylenglykolmonoalkyläthers, enthält. N-Alkylpyrrolidon ist z. B. N-Äthyl- oder vorzugsweise N-Methylpyrrolidon und Diäthylenglykolmonoalkyläther ist vorzugsweise Diäthylenglykolmonoäthyläther.

Diese neue Flüssigformulierung ist konzentriert an Farbstoff, dünnflüssig, besitzt eine Viskosität von etwa 55 cP/20°C (0.055 Pa · s), ist lagerstabil über mehrere Monate bei Temperaturen zwischen $-10$°C und $+60$°C, löslich in kaltem und warmem Wasser in jedem Verhältnis und darf als toxikologisch unbedenklich betrachtet werden.

Die Herstellung dieser Farbstofflösung erfolgt z. B. derart, daß man den definitionsgemäßen Disazofarbstoff in Form der freien Säure beispielsweise als trockene Ware zu einem Gemisch aus N-Methylpyrrolidon, Diäthylenglykolmonoäthyläther und Wasser unter starkem Rühren gibt, mit Lithiumhydroxyd gegebenenfalls im Gemisch mit bis zu 75 Gew.-% Natriumhydroxyd, Kaliumhydroxyd oder Ammoniumhydroxyd neutralisiert und weiterrührt bis eine echte Lösung vorliegt und diese gegebenenfalls filtriert.

Man kann die Farbstoffsäure auch als wäßrigen Preßkuchen einsetzen, wenn man darauf achtet, daß der gewünschte Wassergehalt der fertigen Lösung nicht überschritten wird.

Dies kann man zum Beispiel erreichen, indem man den Preßkuchen durch gründliches Auspressen von überschüssigem Wasser befreit oder man kann etwa Farbstoff als trockenes Pulver zugeben, um den gewünschten Wassergehalt zu erreichen.

Um die freie Farbstoffsäure zu erhalten, kann man das Farbstoffsalz z. B. als trockenes Rohfarbstoffsalz anschlämmen und mit einer starken Säure auf einen pH-Wert von 1—2 stellen, filtrieren und gegebenenfalls trocknen.

Verwendung findet die erfindungsgemäße Flüssigformulierung gegebenenfalls nach dem Verdünnen mit Wasser insbesondere zum Färben und Bedrucken von Cellulose und regenerierter

Cellulose, insbesondere von Cellophan, Papier, Halbkartons und Kartons, wobei man die Papiermaterialien z. B. in der Masse oder durch Tauchen färben kann.

Im übrigen kann eine derartige Flüssigformulierung auch für ein kontinuierliches oder diskontinuierliches Färbeverfahren für Textilmaterialien aus Cellulose eingesetzt werden.

Die folgenden Beispiele veranschaulichen die Erfindung. Die Temperaturen werden in Grad Celsius angegeben. »SR« bedeutet »Schopper Riegler« und »atro« bedeutet »absolut trocken«; %-Angaben bedeuten, sofern nichts anderes angegeben ist, Gewichtsprozente, und Teile sind Gewichtsteile.

## Beispiel 1

### 1) Herstellung der Lösung

a) 275 Teile entkalktes Wasser, 45 Teile N-Methylpyrrolidon und 450 Teile Diäthylenglykolmonoäthyläther werden zusammen vermischt.

220 Teile des Farbstoffes der Formel

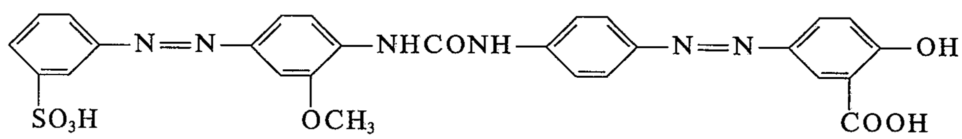

(I)

werden als freie Säure in Form eines trockenen gemahlenen Pulvers unter starkem Rühren in das Lösungsmittelgemisch eingerührt. Man gibt sofort Lithiumhydroxid-Monohydrat ($LiOH/H_2O$) zu und rührt ca. 5 Stunden nach. Der pH-Wert des Gemisches wird bei 7 bis 8 gehalten. Bis zur vollständigen Lösung und Einstellung des End-pH-Wertes auf 7 bis 8 benötigt man ca. 10 Teile Lithiumhydroxid-Monohydrat.

Zur Abtrennung von etwa vorhandenen ungelösten Salzen und anderen Feststoffen (Verunreinigungen aus Metall, Quarz, Silica etc.) wird die Lösung durch ein Metallsieb von 25 µm filtriert.

Man erhält eine Farbstofflösung bestehend aus ca. 22 Gew.-% des obigen Farbstoffes als Lithiumsalz, ca. 1 Gew.-% Mineralsalz (KCl, NaCl, LiCl), 27,5 Gew.-% Wasser, 4,5 Gew.-% N-Methylpyrrolidon und 45 Gew.-% Diäthylenglykolmonoäthyläther. Diese weist eine Viskosität von 55 cP/20° (0.055 Pa · s) auf, und dient nach dem Verdünnen mit Wasser vor allem zum Färben von Papier. Auch bei Lagerung über mehrere Monate bei Temperaturen zwischen −10° und +60° bleibt sie stabil.

b) Man kann im obigen Beispiel das trockene Farbstoffpulver durch den sauren Preßkuchen ersetzen, wenn man darauf achtet, daß der Preßkuchen nicht mehr als ca. 300 Teile Wasser enthält. Falls der Preßkuchen zu viel Wasser enthält, kann man das überschüssige Wasser durch besseres Auspressen oder durch Zugabe trockenen Farbstoffes verringern.

c) Die gewünschte Farbstärke der Endlösung kann man je nach dem durch Zugabe von Diäthylenglykolmonoäthyläther oder eines Gemisches aus Diäthylenglykolmonoäthyläther und Wasser einstellen.

### 2. Herstellung der freien Farbstoffsäure

Aus der Synthese-Lösung, enthaltend das Natriumsalz des Farbstoffes der Formel I, wird dieses bei 95° durch Zugabe von soviel Kaliumchlorid, daß die Lösung 4% Kaliumchlorid enthält, ausgesalzen.

Man läßt die Mischung auf 20° abkühlen und dann durch Zugabe von Eis auf 0° weiter abkühlen.

Durch Zugabe von Salzsäure bei 0 bis 5°, insbesondere 0 bis 1° wird der Farbstoff in die freie Säure übergeführt. Die ausgeschiedene Farbsäure wird abfiltriert und mit einem Gemisch aus 1%iger Natriumchloridlösung und 0,5%iger Salzsäure bei 5° gewaschen und getrocknet.

## Beispiel 2

260 Teile entkalktes Wasser, 50 Teile 2-Pyrrolidon und 440 Teile Diäthylenglykolmonoäthyläther werden zusammen vermischt. 220 Teile des im Beispiel 1 angegebenen Farbstoffes der Formel I werden als freie Säure in Form eines trockenen gemahlenen Pulvers unter starkem Rühren in das Lösungsmittelgemisch eingerührt. Man gibt sofort Lithiumhydroxyid-Monohydrat zu und rührt ca. 5 Stunden nach. Der pH-Wert des Gemisches wird bei 7 bis 8 Gehalten. Bis zur vollständigen Lösung und Einstellung des End-pH-Wertes auf 7 bis 8 benötigt man ca. 30 Teile Lithiumhydroxid-Monohydrat. Zur Abtrennung von etwa vorhandenen ungelösten Salzen und anderen Feststoffen wird die Lösung durch ein Metallsieb von 25 µm filtriert.

Man erhält eine Farbstofflösung bestehend aus ca. 24 Gew.-% des obigen Farbstoffes als

Lithiumsalz, ca. 1 Gew.-% Mineralsalz (KCl, NaCl, LiCl), 26 Gew.-% Wasser, 5 Gew.-% 2-Pyrrolidon und 44 Gew.-% Diäthylenglykolmonoäthyläther. Diese weist eine Viskosität von ca. 55 cP/20° (0.055 Pa · s) auf, und dient nach dem Verdünnen mit Wasser vor allem zum Färben von Papier. Auch bei Lagerung über mehrere Monate bei Temperaturen zwischen −10° und +60° bleibt sie stabil.

Beispiel 3

260 Teile entkalktes Wasser, 50 Teile N-Methylpyrrolidon und 440 Teile Diäthylenglykolmonoäthyläther werden zusammen vermischt. 220 Teile des im Beispiel 1 angegebenen Farbstoffes der Formel I werden als freie Säure in Form eines trockenen gemahlenen Pulvers unter starkem Rühren in das Lösungsmittelgemisch eingerührt. Man gibt sofort 15 Teile Lithiumhydroxid-Monohydrat und 15 Teile Natriumhydroxid in Form von Plätzchen zu und rührt ca. 5 Stunden nach.

Man erhält eine Farbstofflösung bestehend aus ca. 24 Gew.% des obigen Farbstoffes als ca. 1 : 1-Gemisch aus dem Lithiumsalz und dem Natriumsalz, ca. 1 Gew.-% Mineralsalz, 26 Gew.-% Wasser, 5 Gew.-% N-Methylpyrrolidon und 44 Gew.-% Diäthylenglykolmonoäthyläther. Die Lösung ist stabil bei Temperaturen zwischen −10° und +60°.

Beispiel 4

Wenn man im Beispiel 3 das Natriumhydroxid durch eine gleiche Menge Kaliumhydroxid (Plätzchen) ersetzt und sonst gleich verfährt, erhält man eine entsprechende Farbstofflösung, enthaltend ca. 24 Gew.-% des obigen Farbstoffes als ca. 1 : 1-Gemisch aus dem Lithiumsalz und dem Kaliumsalz, die ähnlich gute Eigenschaften aufweist.

Beispiel 5

Druckpapier

800 kg Sulfatcellulose gebleicht und 200 kg Sulfitcellulose gebleicht, werden in der angelieferten Form in einen Pulper, in dem 14 $m^3$ Fabrikationswasser vorgelegt sind, eingetragen und bis zur Stippenfreiheit aufgeschlagen. Der Aufschlagvorgang benötigt 30 Minuten. Anschließend wird der aufgeschlagene Zellstoff in eine Ableerbütte überführt. Aus der Ableerbütte wird die Zellstoffsuspension mit Stoffmühlen auf einen Mahlgrad von 25° SR gemahlen und gelangt anschließend in eine Mischbütte. In der Mischbütte erfolgen als weitere Zusätze 250 kg Kaolin Ia (als Füllstoff) sowie 0,1 bis 0,05% der Farbstoff-Formulierung gemäß Beispiel 1, berechnet auf atro Faser. Nach 15 Minuten Aufziehzeit werden 2% Harzleim, berechnet auf atro Cellulose, sowie nach 10 Minuten 4% Alaun, berechnet auf atro Cellulose, zugefügt. Dieser Papierstoff gelangt über den üblichen Prozeßablauf auf die Papiermaschine. Man erhält ein gelbgefärbtes Druckpapier.

Beispiel 6

Tissuepapier

1000 kg Sulfitcellulose gebleicht werden in der angelieferten Form in einen Pulper, in dem 14 $m^3$ Fabrikationswasser vorgelegt sind, eingetragen und bis zur Stippenfreiheit aufgeschlagen. Der Aufschlagvorgang benötigt 30 Minuten. Anschließend wird der aufgeschlagene Stoff in eine Ableerbütte überführt. Aus der Ableerbütte wird der Zellstoff mit Stoffmühlen auf einen Mahlgrad von 25° SR gemahlen und gelangt anschließend in eine Mischbütte. In der Mischbütte erfolgt die Zugabe von 0,1 bis 0,05% Farbstoff-Formulierung gemäß Beispiel 1, bezogen auf atro Faser. Nach 15 Minuten Aufziehzeit gelangt dieser Papierstoff über den üblichen Prozeßablauf auf die Papiermaschine. Man erhält ein gelbgefärbtes Tissuepapier.

Beispiel 7

Leimpresse-Applikation

In 1000 l einer 10%igen wäßrigen, anionischen Stärkelösung (lösliche Stärke, die oxydativ aufgeschlossen ist) werden 5 kg Farbstoff in Form einer lösungsmittelhaltigen Formulierung gemäß Beispiel 1 gelöst und via Leimpresse auf eine Papierbahn appliziert. Der Auftrag obiger Lösung beträgt 1,5 $g/m^2$ atro je Seite. Man erhält ein gelbgefärbtes Papier.

Beispiel 8

10 Teile Baumwollgewebe (gebleichte mercerisierte Serge) werden in einem Baumfärbeapparat in 250 Teile einer Flotte (Wasserhärte 10° dH, pH 4,5, 4 Umwälzungen der Färbeflotte pro Minute) die 0,012 Teile eines handelsüblichen Egalisiermittel (Albatex PON) 0,2 Teile der gemäß Beispiel 1 erhaltenen Farbstofformulierung und 0,25 Teile Natriumsulfat enthält, gefärbt.

Die Temperatur wird während 30 Minuten von 50° bis auf 98° linear erhöht, und dann während 45 Minuten konstant gehalten.

Am Ende der Aufheizphase werden innerhalb von 15 Minuten in 4 Portionen insgesamt 2 Teile Natriumsulfat dem Färbebad zugegeben.

Der Ausziehgrad beträgt am Ende der Färbung 83%. Es entsteht eine intensive gelbe Färbung.

Beispiel 9

Verfährt man gemäß den Angaben des Beispiels 8, verwendet jedoch 10 Teile Viskosegewebe anstelle des Baumwollgewebes, so erhält man ebenfalls eine intensive gelbe Färbung.

**Patentansprüche**

1. Stabile, konzentrierte Lösung eines Farbstoffes der Disazoreihe, dadurch gekennzeichnet, daß sie 15 bis 30 Gewichtsprozent des Farbstoffes der Formel

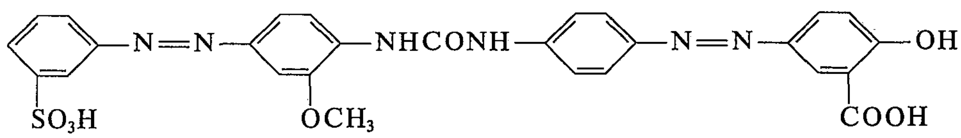

in Form des Lithiumsalzes, gelöst in 5 bis 35 Gewichtsprozent Wasser, 2 bis 10 Gewichtsprozent Pyrrolidon oder N-Alkyl($C_1-C_4$)pyrrolidon und 35 bis 50 Gewichtsprozent eines Diäthylenglykolmonoalkyläthers, enthält.

2. Stabile, konzentrierte Lösung gemäß Anspruch 1, dadurch gekennzeichnet, daß sie zusätzlich bis zu 75 Gewichtsprozent, bezogen auf das Gesamtgewicht des Farbstoffes, des Natrium-, Kalium- oder Ammoniumsalzes dieses Farbstoffes enthält.

3. Stabile, konzentrierte Lösung gemäß den Ansprüchen 1 und 2, dadurch gekennzeichnet, daß sie 20 bis 25 Gewichtsprozent des Disazofarbstoffes gemäß Anspruch 1, gelöst in 20 bis 30 Gewichtsprozent Wasser, 3 bis 8 Gewichtsprozent Pyrrolidon oder N-Alkyl-($C_1-C_4$)-pyrrolidon und 40 bis 50 Gewichtsprozent eines Diäthylenglykolmonoalkyläthers, enthält.

4. Stabile, konzentrierte Lösung gemäß den Ansprüchen 1 bis 3, dadurch gekennzeichnet, daß sie als Diäthylenglykolmonoalkyläther Diäthylenglykolmonoäthyläther enthält.

5. Stabile, konzentrierte Lösung gemäß den Ansprüchen 1 bis 4, dadurch gekennzeichnet, daß sie N-Methylpyrrolidon enthält.

6. Verfahren zur Herstellung der Lösung gemäß den Ansprüchen 1 bis 5, dadurch gekennzeichnet, daß man den definitionsgemäßen Disazofarbstoff in Form der freien Säure entweder als trockene Ware oder als wäßrigen Preßkuchen zu einem Gemisch aus Pyrrolidon bzw. N-Alkylpyrrolidon, Diäthylenglykolmonoalkyläther und gegebenenfalls Wasser unter starkem Rühren gibt, mit Lithiumhydroxid gegebenenfalls im Gemisch mit bis zu 75 Gewichtsprozent Natriumhydroxid, Kaliumhydroxid oder Ammoniumhydroxid neutralisiert und weiterrührt, bis eine echte Lösung vorliegt und diese gegebenenfalls filtriert.

7. Verwendung der Lösung gemäß den Ansprüchen 1 bis 5, bzw. erhalten gemäß dem Verfahren des Anspruches 6 zum Färben und Bedrucken von Cellulose und regenerierten Cellulose, insbesondere von Cellophan, Papier, Halbkartons und Kartons.

8. Das mit der Lösung gemäß Anspruch 1 gefärbte und bedrückte Material aus Cellulose und regenerierter Cellulose, insbesondere Cellophan, Papier, Halbkarton oder Karton.

**Claims**

1. A stable concentrated solution of a dye of the disazo class, which solution contains 15 to 30 per cent by weight of the dye of the formula

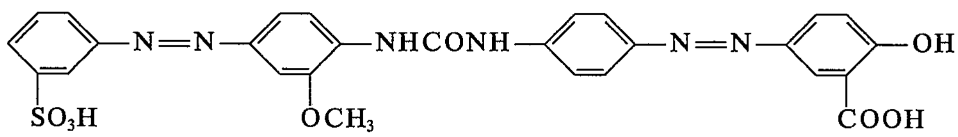

in the form of the lithium salt, dissolved in 5 to 35 per cent by weight of water, 2 to 10 per cent by weight of pyrrolidone or of N-alkyl-($C_1-C_4$)-pyrrolidone and 35 to 50 per cent by weight of a diethylene glycol monoalkyl ether.

2. A stable concentrated solution according to Claim 1, which additionally contains up to 75 per cent by weight, relative to the total weight of the dye, of the sodium, potassium or ammonium salt of this dye.

3. A stable concentrated solution according to Claims 1 and 2, which contains 20 to 25 per cent by weight of the disazo dye according to Claim 1, dissolved in 20 to 30 per cent by weight of water, 3 to 8 per cent by weight of pyrrolidone or of N-alkyl-($C_1-C_4$)-pyrrolidone and 40 to 50 per cent by weight of a diethylene glycol monoalkyl ether.

4. A stable concentrated solution according to Claims 1 to 3, which contains, as diethylene glycol monoalkyl ether, diethylene glycol monoethyl ether.

5. A stable concentrated solution according to Claims 1 to 4, which contains N-methylpyrrolidone.

6. A process for producing the solution according to Claim 1 to 5, which process comprises adding, while vigorously stirring, the disazo dye as defined, in the form of the free acid, either as dry material or as aqueous press cake, to a mixture of pyrrolidone or N-Alkylpyrrolidone, diethylene glycolmonoalkyl ether and optionally water; neutralising with lithium hydroxide, optionally in admixture with up to 75 per cent by weight of sodium hydroxide, potassium hydroxide or ammonium hydroxide; and further stirring until a true solution is obtained, and optionally filtering this solution is obtained, and optionally filtering this solution.

7. Use of the solution according to Claims 1 to 5, or obtained by the process of Claim 6, for dyeing and printing cellulose and regenerated cellulose, particularly cellophane, paper, semi-cardboard and cardboard.

8. The material made from cellulose and regenerated cellulose, particularly cellophane, paper, semi-cardboard and cardboard, dyed or printed with the solution according to Claim 1.

## Revendications

1. Solution concentrée stable d'un colorant disazoique, caractérisée par le fait qu'elle contient 15 à 30% en poids du colorant de formule

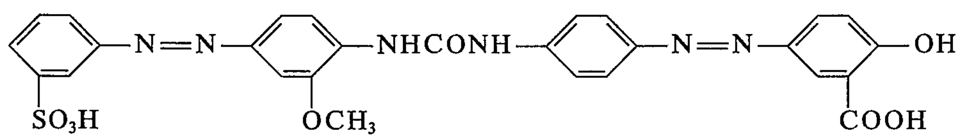

sous la forme de sel de lithium, dissous dans 5 à 35% en poids d'eau, 2à 10% en poids de pyrrolidone ou de N-alkyl ($C_1-C_4$)-pyrrolidone et de 35 à 50% en poids d'un diéthylèneglycolmonoalkyléther.

2. Solution concentrée stable selon la revendication 1, caractérisée par le fait qu'elle contient en plus jusqu'à 75% en poids, rapportés au poids total du colorant, du sel de sodium, de potassium ou d'ammonium de ce colorant.

3. Solution concentrée stable selon les revendications 1 et 2, caractérisé par le fait qu'elle contient 20 à 25% en poids du colorant disazoique selon la revendication 1, dissous dans 20 à 30% en poids d'eau, 3 à 8% en poids de pyrrolidone ou de N-alkyl-($C_1-C_4$)-pyrrolidone et 40 à 50% en poids de diéthylèneglycolmonoalkyléther.

4. Solution concentrée stable selon les revendications 1 à 3, caractérisée par le fait qu'elle contient comme diéthylèneglycolmonoalkyléther du diéthylèneglycolmonoéthyléther.

5. Solution concentrée stable selon les revendications 1 à 4, caractérisée par le fait qu'elle contient de la N-méthylpyrrolidone.

6. Procédé pour la préparation de la solution selon les revendications 1 à 5, caractérisé par le fait qu'on ajoute sous agitation énergique le colorant disazoique conforme à la définition, à l'état d'acide libre, soit sous forme de marchandise sèche soit sous forme de gâteau pressé aqueux, à un mélange de pyrrolidone ou de N-alkylpyrrolidone, de diéthylèneglycolmonoalkyléther et éventuellement d'eau, qu'on neutralise avec l'hydroxyde de lithium éventuellement en mélange avec jusqu'à 75% en poids d'hydroxyde de sodium, d'hydroxyde de potassium ou d'hydroxyde d'ammonium, puis qu'on agite jusqu'à ce qu'on obtienne une vraie solution et qu'on filtre éventuellement cette dernière.

7. Utilisation de la solution selon les revendications 1 à 5, ou obtenue selon le procédé de la

revendication 6, pour teindre et imprimer de la cellulose et de la cellulose régénérée, en particulier de la cellophane, du papier, des semi-cartonset des cartons.

8. La matière en cellulose et en cellulose régénérée, en particulier la cellophane, le papier, le semi-carton ou le carton, teints et imprimés avec la solution selon la revendication 1.